# EUROPÄISCHE PATENTSCHRIFT

(11) **EP 2 951 787 B1**
(45) Veröffentlichungstag und Bekanntmachung des Hinweises auf die Patenterteilung: **18.12.2019**
(21) Anmeldenummer: 14701745.3
(22) Anmeldetag: 28.01.2014
(51) Int. Cl.: G06T 15/20, G06T 17/00

(54) **VERFAHREN UND VORRICHTUNG ZUM VERARBEITEN VON 3D-BILDDATEN**
METHOD AND DEVICE FOR PROCESSING 3D IMAGE DATA
PROCÉDÉ ET DISPOSITIF DE TRAITEMENT DE DONNÉES D'IMAGES TRIDIMENSIONNELLES

(30) Priorität: 29.01.2013 DE 102013201377
(43) Veröffentlichungstag der Anmeldung: 09.12.2015
(73) Patentinhaber: Bayerische Motoren Werke Aktiengesellschaft, 80809 München (DE)
(72) Erfinder: VON BEUNINGEN, Sven, 80686 München (DE); LOTTERBACH, Timo, 85375 Neufahrn (DE); OCHS, Tilmann, 80799 München (DE); SCHULDT, Michael, 85716 Unterschleißheim (DE)
(86) Internationale Anmeldenummer: PCT/EP2014/051576
(87) Internationale Veröffentlichungsnummer: WO 2014/118145

(56) Entgegenhaltungen:
- DE-A1-102009 048 834
- US-A- 5 764 139
- US-A1- 2012 139 906
- KUMAR S ET AL: "Second Life and the New Generation of Virtual Worlds", COMPUTER, IEEE, US, Bd. 41, Nr. 9, 1. September 2008 (2008-09-01), Seiten 46-53, XP011234228, ISSN: 0018-9162, DOI: 10.1109/MC.2008.398

## Beschreibung

Die Erfindung betrifft ein Verfahren und eine Vorrichtung zum Verarbeiten von 3d-Bilddaten. Die Erfindung betrifft insbesondere Verfahren und Systeme, bei denen Objekte in dreidimensionaler (3d) Darstellung mit so genannten 3d-Bilddaten beschrieben werden.

Beispielsweise gibt es in Kraftfahrzeugen mikroprozessorgesteuerte Systeme, auf denen Anwendungen ausgeführt werden, die 3d-Bilddaten erzeugen. Dazu baut jede Anwendung bzw. Applikation ein separates, so genanntes Szenenmodell auf, das eine 3d-Szene beschreibt. Zur Darstellung der 3d-Szene auf einer Anzeigeeinheit werden so genannte Renderer eingesetzt. Diese Systeme können ebenfalls auf einem Mikroprozessor, insbesondere auf einem Computer, ausgeführt werden. Sie dienen im Wesentlichen dazu, die 3d-Bilddaten der 3d-Szene so zu verarbeiten, dass sie zur Darstellung auf der Anzeigeeinheit angepasst sind.

Im Zuge eines Rendering-Prozesses kann beispielsweise eine Berechnung eines Bildes aus einer 3d-Szene erfolgen. Bei der Umsetzung von 3d-Bilddaten, die eine Vektorgrafik beschreiben, kann im Zuge des Rendering-Prozesses beispielsweise eine Konvertierung der Vektorgrafik eines Objekts in eine bildpunktweise Pixeldarstellung des Objekts in einer zweidimensionalen (2d) Computergrafik erfolgen.

Ein 3d-Renderer kann beispielsweise aus jeder einzelnen 3d-Szene eine separate 2d-Grafik generieren. Mittels einer Steuerungskomponente, einem so genannten Layer-Manager, kann durch Überlagerung verschiedener 2d-Grafiken ein Gesamtbild für die Anzeige auf einer Anzeigeeinheit erzeugt werden. Dabei werden die einzelnen 2d-Bilder nach einer festen Reihenfolge als Ebenen übereinander gelegt. Inhalte aus einer höheren Ebene können dabei Inhalte aus einer niedrigeren Ebene überdecken. Für die oberste Ebene kann die Sichtbarkeit von deren Inhalten garantiert werden.

Durch eine derartige auf Ebenen basierte Architektur bzw. Datenverarbeitung können 3d-Inhalte von verschiedenen Applikationen auf einem gemeinsamen Display angezeigt werden. Dabei kann auch sichergestellt werden, dass Inhalte einer sicherheitsrelevanten Applikation auf dem Display dargestellt werden, d.h. dass sie nicht von Inhalten anderer, nicht sicherheitsrelevanter Applikationen überdeckt werden.

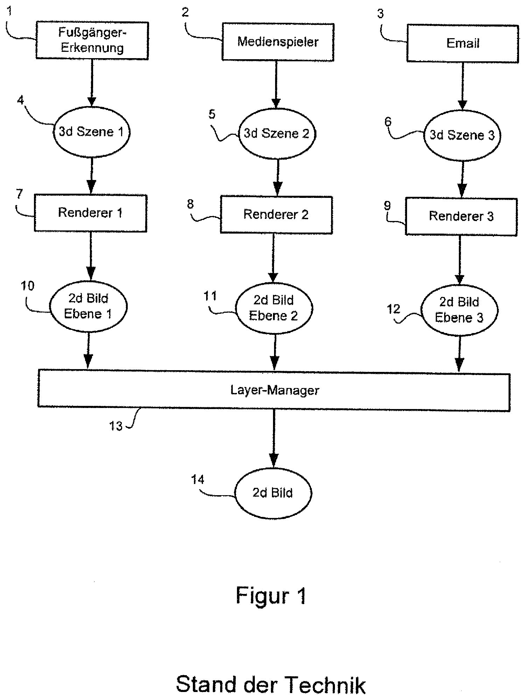

Figur 1 zeigt eine entsprechende Bildverarbeitungs-Architektur wie sie beispielsweise zum Anmeldezeitpunkt in Kraftfahrzeugen vorgesehen sein konnte. Dabei laufen in mehreren Steuerungen bzw. Geräten in dem Kraftfahrzeug drei Anwenderprogramme ab, nämlich in einer fahrzeuginternen Steuerung ein Anwenderprogramm 1 zur Fußgänger-Erkennung, in einem im Fahrzeug eingebauten Multimedia-System ein Medienspieler 2 und in einem im Fahrzeug vorübergehend angeschlossenen Smartphone eine E-Mail-Anwendung 3. Die Anwendungsprogramme erzeugen jeweils Bilddaten, die eine 3d-Szene 4, 5 bzw. 6 beschreiben. Beispielsweise kann in der Szene 4 ein Fußgängerumriss dargestellt sein, in der Szene 5 ein vom Medienspieler erzeugtes Foto und in der Szene 6 eine email-Liste. Die Szenen-Bilddaten werden in den jeweiligen Anwendungsprogrammen zugeordneten Renderern 7, 8, 9 zu 2d-Bildern umgewandelt. Dabei sind den Anwendungsprogrammen 1, 2, 3 auch Ebenen zugeordnet, wobei die Bilddaten 10 einer obersten Ebene zugeordnet sind, die Bilddaten 11 einer mittleren Ebene und die Bilddaten 12 einer untersten Ebene. Eine Layer-Manager Anwendung 13 empfängt die jeweiligen Bilddaten und überlagert sie ebenenweise, wobei die oberste Ebene alle weiter unterliegenden Ebenen überlagert. Dadurch entsteht ein 2d-Bild 14, das vom Layer-Manager 13 ausgegeben wird.

Nachteilig bei dem beschriebenen Verfahren, jede 3d-Szene separat zu rendern und später eine ebenenweise Überlagerung vorzunehmen, ist, dass keine räumlich verursachten Verdeckungen oder optischen Effekte wie Spiegelungen und Schatten zwischen Elementen verschiedener 3d-Szenen berechnet werden können. Zudem ist es beispielsweise in Kraftfahrzeugen mitunter nötig, bestimmte Grafikinhalte über mehrere Anzeigeeinheiten verteilt anzuzeigen, beispielsweise ein erster Grafikteil in einer Hauptanzeige-Einheit im Bereich des Lenkrads, ein zweiter Grafikteil in einem Infotainmentsystem im Mittelkonsolen-Bereich und ein dritter Grafikteil in einem weiteren Infotainment System im Bereich der Fond-Sitze. Einzelne Grafikteile können dabei auch gleichzeitig in mehreren Anzeigeeinheiten angezeigt werden. Derartige Anforderungen kann der beschriebene ebenenbasierte Ansatz nicht hinreichend gut erfüllen.

Aus der US 7,145,562 B2 ist ein System zur Darstellung zweidimensionaler und dreidimensionale Objekte in einer zweidimensionalen Computergrafik bekannt, bei dem 2d-Objekte und 3d-Objekte hierarchisch in eine gemeinsame Szene integriert werden können.

Im Dokument US 5,764,139 wird ein System zur Darstellung von Informationen in einem Fahrzeug offenbart, wobei Auswahl der Informationen sowie die Art und Weise der Darstellung durch den Fahrzeugzustand bestimmt werden.

Aus dem Dokument Sanjeev Kumar et. al., Second Life and the New Generation of Virtual Worlds, IEEE Computer Society, Bd. 41, Nr. 9, Seiten 46-53, ISSN 0018-9162 (September 2008) ist es im Zusammenhang mit dem Computerspiel "Second Life" bekannt, 3d-Bildinhalte von einem zentralen Server an eine Gruppe von Clients auszugeben und die Bildinhalte auf Basis von Aktionen der Clients zu aktualisieren. Dabei werden Bildobjekte im Server in einer übergeordneten Welt-Struktur verwaltet und zur Ausgabe von Bildobjekten an die jeweiligen Clients Berechnungen durchgeführt um clientweise geeignete Ausgabedaten zu bilden, die beispielsweise die Sichtbarkeit des zugehörigen Objekts berücksichtigen.

Bei der Darstellung von Computergrafiken finden Erzeugung und Präsentation des fertigen Bildes häufig im gleichen Gerät statt. Um einen Austausch von Grafikinhalten über Gerätegrenzen hinweg zu realisieren werden die Grafikdaten in der Regel in vorgegebenen Formaten, sogenannten Videostreams, übertragen. Die Videostreams werden dabei über eine Schnittstelle an ein entferntes Gerät übertragen und dort in die lokale Szene integriert. Nachteilig ist dabei, dass es meist nur mit hohem Aufwand möglich ist, Wechselwirkungen zwischen entfernten und lokalen Szenen festzustellen und in der Zielgrafik zu realisieren. Befinden sich beispielsweise in dem übertragenen Videostream Objekte, die einen Schatten werfen und soll dieser Schatten auch auf den Objekten in der lokalen Szene sichtbar sein, dann ist es zum Einen erforderlich, Zusatzinformationen zwischen den beiden Geräten auszutauschen. Zum Anderen erfordert dies einen hohen Rechenaufwand beim Erzeugen der Zielgrafik.

Es ist Aufgabe der Erfindung, in einem Kraftfahrzeug eine Überlagerung von Bildern, die auf 3d-Eingabebilddaten beruhen, mit hoher Genauigkeit und vertretbarem Rechenaufwand zu ermöglichen.

Diese Aufgabe wird durch die in den unabhängigen Patentansprüchen angegebene Erfindung gelöst. Vorteilhafte Ausführungsformen der Erfindung sind in den abhängigen Ansprüchen angegeben.

Mit der Erfindung kann vorteilhaft ein Fahrzeugführer bei seinen Aufgaben unterstützt werden und damit die Fahrsicherheit erhöht werden, beispielsweise indem sicherheitsrelevante Bildelemente andere Bildelemente, die nicht sicherheitsrelevant sind, auf der Anzeigeeinheit überlagern, d.h. mit hoher Sicherheit dargestellt werden.

Erfindungsgemäß ist zum Verarbeiten von 3d-Eingabebilddaten zur Anzeige von Bildern auf mindestens einer Anzeigeeinheit in einem Kraftfahrzeug vorgesehen, dass die 3d-Eingabebilddaten jeweils szenenweise entsprechend einer zugeordneten 3d-Bildszene von Client-Anwendungen bereitgestellt werden. Die 3d-Eingabebilddaten werden jeweils einer Szenen-Verarbeitungseinheit zur Verwaltung und Verarbeitung zugeführt und szenenweise in der Szenen-Verarbeitungseinheit verarbeitet. Dabei werden zumindest zwei 3d-Bildszenen zumindest teilweise überlagert und eine 3d-Gesamtszene gebildet und verwaltet. Aus der 3d-Gesamtszene werden mehrere 3d-Ausgabeszenen abgeleitet, bei denen die Überlagerung jeweils entsprechend einem perspektivischen Beobachtungsort erfolgt und wobei 3d-Ausgabebilddaten erzeugt werden. Die 3d-Ausgabebilddaten werden mindestens einer Rendereinheit, die der Anzeigeeinheit zugeordnet ist, zum Erzeugen von an die Anzeigeeinheit angepassten Zielbilddaten zugeführt. Die Client-Anwendungen erzeugen jeweils den 3d-Bildszenen zugeordnete Sicherheits-Parameter, die jeweils eine Prioritätsstufe angeben, wobei eine Prioritätsstufe jeweils angibt, in welchem Maß die zugehörige 3d-Bildszene bei der Überlagerung mit einer anderen 3d-Bildszene sichtbar bleibt. Den 3d-Eingabebilddaten wird jeweils eine von mindestens zwei Prioritätsstufen zugeordnet. Die 3d-Ausgabeszenen werden derart gestaltet, dass beim Erzeugen der Zielbilddaten in der Rendereinheit an einer Zielbildkoordinate diejenigen Zielbilddaten, die aus einer 3d-Bildszene einer höheren Prioritätsstufe abgeleitet werden, Zielbilddaten, die aus einer niedrigeren Prioritätsstufe abgeleitet werden, überlagern.

Die 3d-Eingabebilddaten enthalten typische Werte zur Darstellung von 3d-Objekten, insbesondere 3d-Koordinatendaten und Objektattribute. Eine 3d-Szene kann datentechnisch insbesondere über einen Szenenbaum bzw. einen Szenengraphen strukturiert sein. Die 3d-Eingabebilddaten können insbesondere von mehreren Client-Computersystemen bereit gestellt werden. Die Client-Computersysteme, die Szenen-Verarbeitungseinheit und die Rendereinheit können mikroprozessorgesteuerte Geräte und/oder auf solchen Geräten geladene und ablaufende Computerprogramm-Anwendungen sein.

Die Erfindung beruht auf der Erkenntnis, dass das Bilden einer 3d-Gesamtszene eine vereinfachte und gleichzeitig genaue Verarbeitung zum Ableiten der 3d-Ausgabebilddaten aus den verschiedenen 3d-Eingabebilddaten bzw. aus den ihnen zugeordneten 3d-Bildszenen ermöglicht. Die Erfindung beruht auch auf der Erkenntnis, dass die Überlagerung der 3d-Bildszenen vorteilhaft aus der 3d-Gesamtszene heraus möglich ist. Zudem wurde erkannt, dass es günstig ist, einen jeweiligen perspektivischen Beobachtungsort bei der Überlagerung aus der 3d-Gesamtszene heraus in die Bildung der 3d-Ausgabebilddaten einfließen zu lassen. Der perspektivische Beobachtungsort kann als Kameraparameter in die Überlagerung einfließen, wobei als Kameraparameter übliche perspektivische Parameter wie Öffnungswinkel der Bildszene oder Abstand zur Bildszene verwendet werden können. Als Kameraparameter können beispielsweise vorgesehen sein:
- Eine Transformationsmatrix, die die Position und Orientierung der Kamera im 3d-Raum beschreibt und die beispielsweise Position und/oder relative Blickrichtung oder Punkt, auf den die Kamera gerichtet ist, beschreibt. Zusätzlich kann ein Vektor vorgesehen sein, der eine Vorzugsrichtung angibt, z.B. die Senkrechte nach oben.
- Öffnungswinkel insbesondere in vertikaler Richtung
- Seitenverhältnis des Zielbildes, zum Beispiel 16:9
- Ein so genannter Near-Plane Parameter, der der Entfernung von der Kameraposition zu einer Projektionsfläche entspricht, wobei alle Elemente vor dieser Fläche im Zielbild nicht sichtbar sind.
- Ein so genannter Far-Plane Parameter, der der Entfernung von der Kameraposition zu einer Fläche, die den Kameraraum begrenzt, entspricht, wobei alle Elemente hinter dieser Fläche im Zielbild nicht sichtbar sind.

Wenn Near-Plane und Far-Plane-Parameter angewandt werden, dann nimmt eine Kamera nur Szenenelemente auf, die zwischen der Near-Plane und der Far-Plane liegen. Die Flächen der Planes ergeben sich aus dem vertikalen Öffnungswinkel, dem Seitenverhältnis und dem jeweiligen Wert der Near- oder Far-Plane.

Der perspektivischen Beobachtungsort bzw. Kameraparameter kann jeweils der räumlichen Position, Ausrichtung und/oder sonstigen Parametern der mindestens einen Anzeigeeinheit entsprechen. Die Anzeigeeinheit kann zur Darstellung von 3d-Bildern geeignet sein. Sie kann auch zur Darstellung von 2d-Bildern ausgebildet ein. Je nach der Darstellungsart wandelt die Rendereinheit die 3d-Ausgabebilddaten in 3d-Zielbilddaten oder in 2d-Zielbilddaten um. Im Falle von 2d-Zielbilddaten ist die Rendereinheit insbesondere ein Rasterprozessor. Es können mehrere Anzeigeeinheiten vorgesehen sein. Verschiedenen Anzeigeeinheiten können verschiedene perspektivische Beobachtungsorte bzw. verschiedene Kameraparameter zugeordnet sein. Dann kann zum Ableiten der 3d-Ausgabeszenen aus der 3d-Gesamtszene die Überlagerung der 3d-Bildszenen jeweils entsprechend den verschiedenen perspektivischen Beobachtungsorten bzw. Parametern erfolgen. Es können auch mehrere Rendereinheiten vorgesehen sein, denen jeweils eine oder mehrere Anzeigeeinheiten zugeordnet sein können.

Durch die global verwaltete 3d-Gesamtszene können die Übertragung von Videostreams eingespart und Grafikinhalte zwischen verschiedenen Anzeigeeinheiten unmittelbar ausgetauscht werden. Die Einbindung zusätzlicher Anzeigeeinheiten wird erheblich vereinfacht. Dazu kann es ausreichen, in den jeweiligen Systemeinheiten jeweils einen geringen Steuerungsanteil, beispielsweise einen kleinen Softwareanteil, anzupassen um eine neue Anzeigeeinheit in den Anzeigeverbund mehrerer Anzeigeeinheiten aufzunehmen. Zusätzlich ist es möglich, dass beliebige Geräte neue Grafikinhalte zur Gesamtszene beisteuern. Eine Anzeigeeinheit kann jeweils eine physisch fest mit ihr verbundene, eigene Rendereinheit aufweisen.

Den 3d-Eingabebilddaten wird jeweils eine von mindestens zwei Prioritätsstufen zugeordnet, wobei eine Prioritätsstufe jeweils angibt, in welchem Maß die zugehörige 3d-Bildszene bei der Überlagerung mit einer anderen 3d-Bildszene sichtbar bleibt. Die 3d-Ausgabeszenen sind derart gestaltet, dass beim Erzeugen der Zielbilddaten in der Rendereinheit an einer Zielbildkoordinate diejenigen Zielbilddaten, die aus einer 3d-Bildszene einer höheren Prioritätsstufe abgeleitet werden, Zielbilddaten, die aus einer niedrigeren Prioritätsstufe abgeleitet werden, überlagern. Dadurch kann beispielsweise erreicht werden, dass sicherheitsrelevante Bildelemente andere Bildelemente, die nicht sicherheitsrelevant sind, auf der Anzeigeeinheit überlagern, d.h. mit hoher Sicherheit dargestellt werden. Beispielsweise kann in einem Kraftfahrzeug sichergestellt werden, dass auf der Anzeigeeinheit die sicherheitsrelevante Anzeige über die Höhe eines eingelegten Gangs eine nicht sicherheitsrelevante Anzeige von Navigationsdaten überlagert. Die Zuordnung der Prioritätsstufen kann 3d-bildszenenweise, im Szenenbaum und/oder in Form eines Attributs erfolgen. Zusätzlich kann vorgesehen werden, dass bei einer Speicherung von als sicherheitsrelevant gekennzeichnete Bilddaten, insbesondere in der Szenenverwaltungseinheit und/oder von in Rendering-Einheit, ein Speicher-Schreibschutz erfolgt, durch den ein unbeabsichtigtes Überschreiben des Speichers verhindert wird.

Mit der Erfindung ist es möglich, sicherheitsrelevante und nicht sicherheitsrelevante 3d-Inhalte von unterschiedlichen Client-Computersystemen gemeinsam in der Szenen-Verarbeitungseinheit zu verarbeiten und daraus eine 3d-Gesamtszene mit gemischten Inhalten zu erzeugen. Dabei können einerseits sicherheitsrelevante 3d-Inhalte mittels der zugeordneten Attribute vor unbeabsichtigten Manipulationen und vor Überdeckungen geschützt werden. Andererseits ist es dadurch möglich, eine kohärente 3d-Gesamtszene unter Berücksichtigung von Überdeckungen von 3d-Bildszenen, optischen Effekten und Interaktionen zwischen den 3d-Bildszenen zu bilden. Mit der Erfindung kann somit ein so genanntes Mixed-Criticality System zur Bildverarbeitung insbesondere in einem Kraftfahrzeug angegeben werden.

Um sicherzustellen, dass Zielbilddaten zu sicherheitsrelevanten Anzeigen, die von der Rendereinheit an die Anzeigeeinheit ausgegeben werden, dort korrekt dargestellt werden, kann eine Prüfung durch einen Checksummen-Vergleich der beiden Einheiten erfolgen.

In einem vorteilhaften Ausführungsbeispiel der Erfindung sind mehrere Anzeigeeinheiten vorgesehen, denen jeweils eine Rendereinheit zugeordnet ist. Die Szenen-Verarbeitungseinheit kann dann für die Anzeigeeinheiten jeweils unterschiedliche 3d-Ausgabebilddaten, insbesondere als Teilszene bzw. so genannte Subszene aus der 3d-Gesamtszene, erzeugen und die 3d-Ausgabebilddaten können insbesondere subszenenweise an eine oder mehrere Rendereinheiten zum Erzeugen der Zielbilddaten verteilt werden. Die Verteilung der 3d-Ausgabebilddaten an mehrere Rendereinheiten ermöglicht auch vorteilhaft, für eine einzige Anzeigeeinheit bestimmte Bilddaten an mehrere Rendereinheiten zu verteilen. Durch einen solchen, verteilten Rendering-Prozess ist es andererseits möglich, eine geringer ausgelastete Rendereinheit einer ersten Anzeigeeinheit auch zum Rendern von 3d-Ausgabebilddaten einer zweiten Anzeigeeinheit zu verwenden, deren Rendereinheit stark ausgelastet ist. Dieser Vorteil kann weiter verstärkt werden indem die Zielbilddaten beispielsweise über die zugrunde liegenden 3d-Ausgabebilddaten und die zugeordneten perspektivischen Kameraparameter jeweils einer Anzeigeeinheit zugeordnet werden. Die Rendereinheit kann dann die Zielbilddaten an die jeweils Ihnen zugeordnete Anzeigeeinheit ausgeben.

Wenn für den Rendering-Prozess mehrere Rendereinheiten vorgesehen werden, dann können mehrere Konfigurationen und Vorteile erreicht werden. Zum einen besteht eine gewisse Ausfallsicherheit in dem beim Ausfall einer Rendereinheit eine andere Rendereinheit deren Renderaufgaben übernehmen kann. Zum anderen besteht eine Skalierbarkeit in dem die Renderleistung erhöht werden kann indem eine zusätzliche Rendereinheit vorgesehen wird oder eine vorhandene Rendereinheit, die schwach ausgelastet ist, zusätzliche Renderaufgaben einer anderen Rendereinheit, die stark ausgelastet ist, übernimmt. Weiterhin können Rendering-Aufgaben hinsichtlich der Sicherheit-Relevanz zwischen verschiedenen Rendereinheiten aufgeteilt werden. Beispielsweise kann eine Rendereinheit im Verbund mehrerer Rendereinheiten für die jeweiligen 3d-Ausgabebilddaten reserviert werden, die als sicherheitsrelevant gekennzeichnet sind bzw. denen die höchste Prioritätsstufe zugeordnet ist. Diese Rendereinheit kann dann beispielsweise einen Speicher-Schreibschutz für die sicherheitsrelevanten Daten vorsehen.

Zwischen der Rendereinheit und der Szenen-Verwaltungseinheit kann insbesondere eine bidirektionale Interaktion dahingehend bestehen, dass die Rendereinheit Daten zu den perspektivischen Beobachtungsorten an die Szenen-Verwaltungseinheit übermittelt und umgekehrt die Szenen-Verwaltungseinheit die 3d-Ausgabebilddaten an die Rendereinheit übermittelt. Die Daten zu den perspektivischen Beobachtungsorten können wiederum entsprechende Daten der Anzeigeeinheit, insbesondere Koordinatendaten der Anzeigeeinheit, umfassen bzw. von diesen abgeleitet sein. Insbesondere wenn mehrere Anzeigeeinheiten vorgesehen sind, kann dadurch sichergestellt werden, dass überlappende bzw. gekoppelte Darstellungen einer Bildszene auf verschiedenen Anzeigeeinheiten perspektivisch korrekt erfolgen.

Gemäß einer anderen vorteilhaften Ausführungsform der Erfindung verwendet die Szenen-Verarbeitungseinheit zum Bilden der 3d-Gesamtszene Interaktionsparameter, die eine Wechselwirkung zwischen 3d-Bildelementen von mindestens zwei der Client-Computersysteme beschreiben. Dadurch können beispielsweise Überdeckungen von 3d-Bildelementen der Client-Computersysteme berechnet und in der Anzeigeeinheit korrekt dargestellt werden. Auch optische Effekte wie Spiegelungen und Schattenwürfe zwischen 3d-Bildelementen können vorteilhaft von der Szenen-Verarbeitungseinheit aus der 3d-Gesamtszene berechnet werden und später auf einer Anzeigeeinheit dargestellt werden. Dabei können als Interaktionsparameter beispielsweise Latenzparameter, Transparenzparameter oder Reflexionskoeffizienten, die 3d-Bildelementen als Attribute zugeordnet sind, verwendet werden oder Beleuchtungsparameter wie Lichtstärke, Farbe und Lichtausbreitungsrichtung einer Lichtquelle, die einer 3d-Bildszene zugeordnet ist bzw. in der 3d-Bildszene als 3d-Bildelement vorgesehen ist. Beispielsweise könnte auf der Anzeigeeinheit eines Kraftfahrzeugs aufgrund des gelben Lichts einer darzustellenden, blinkenden Ampel das Bild eines Fußgänger-Symbols, das nahe der Ampel darzustellen ist, periodisch leicht gelblich eingefärbt werden. Eine Interaktion zwischen 3d-Bildelementen kann dynamisch erfolgen, wenn die 3d-Bildelemente innerhalb eines geeigneten Dynamikzeitraums von z.B. einer Millisekunde bis 50 Millisekunden jeweils neu berechnet bzw. auf der Anzeigeeinheit dargestellt werden. Dadurch können auch Animationen erfolgen.

In der Rendereinheit kann vorzugsweise ein so genanntes Deferred Shading erfolgen, bei dem der Renderingprozess stufenweise erfolgt, wobei der Prozess an vorgegebenen Prozessstufen vorzeitig beendet werden kann, an denen in der Anzeigeeinheit ausgebbare Zielbilddaten vorliegen und wobei an jeweils höheren Prozessstufen sukzessive eine bessere Bildqualität erreicht wird.

Zum Überwachen der Rendering-Genauigkeit kann weiterhin vorgesehen werden, dass im Zuge des Renderns der 3d-Ausgabebilddaten parallel ein vorgegebenes Referenzbild gerendert wird, insbesondere ein Referenzmuster und/oder ein hinsichtlich der Bildgröße gegenüber den 3d-Ausgabebilddaten sehr viel kleineres Mini-Bild. Anhand des Rendering-Ergebnisses des Referenzbilds kann dann entschieden werden, ob das Rendering-Ergebnis der 3d-Ausgabebilddaten für die weitere Verarbeitung verwendet oder verworfen wird. Für das Mini- bzw. Referenzbild kann insbesondere ein Rendering-Datensatz Verwendung finden, der an die jeweilige Rendereinheit, an die 3d-Bildszene und/oder ihr zugeordnete Parameter angepasst ist. Beispielsweise kann ein solches Mini-Bild für jeweils ein 3d-Bildelement und/oder eine 3d-Bildszene vorgesehen werden, das sicherheitsrelevant sind. Es kann hinsichtlich bildverarbeitungsrelevanter Eigenschaften wie Größe, Position, Farbe, Komplexität usw. dem jeweiligen 3d-Bildelement angeglichen sein. Zu einer 3d-Bildszene können mehrere Mini-Bilder vorgesehen sein.

Im Folgenden werden weitere Ausführungsbeispiele der Erfindung anhand von Figuren näher erläutert. Es zeigen:
- Figur 1: eine Bildverarbeitungs-Architektur nach dem Stand der Technik,
- Figur 2: eine erfindungsgemäße Bildverarbeitungs-Architektur,
- Figur 3: Details einer Bildverarbeitungs-Architektur und
- Figur 4: einen Deferred Shading Prozess.

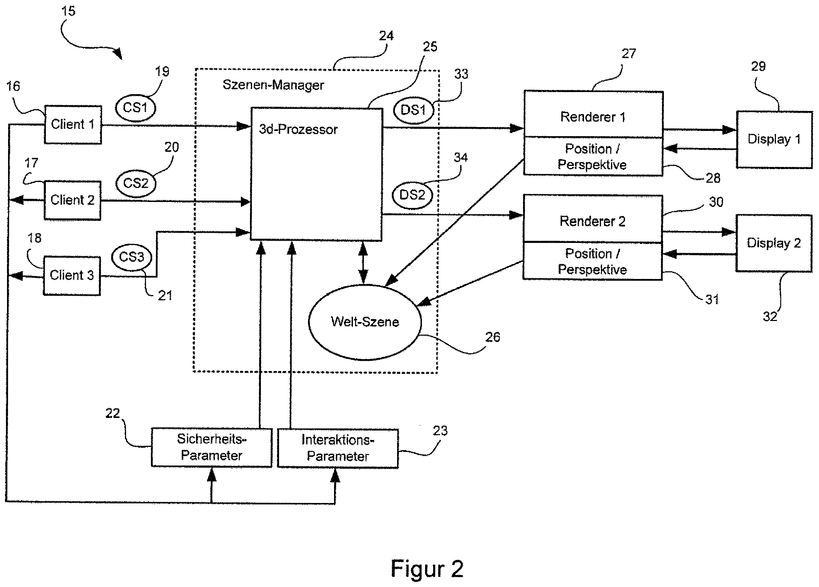

In der in Figur 2 dargestellten Bildverarbeitung-Architektur 15 werden 3d-Bilddaten, die von Client-Computerprogramm Anwendungen 16, 17,18 erzeugt werden, einem Szenen-Manager 24 zugeführt, der diese empfangenen 3d-Eingabebilddaten in einer Welt-Szene 26 zusammenführt und zu 3d-Ausgabebilddaten verarbeitet für eine letztliche Darstellung der Bildszenen an Anzeigegeräten (Displays) 29, 32. Dazu werden die 3d-Ausgabebilddaten für die jeweils zugeordnete Display-Szene 33, 34 vom Szenen-Manager 24 an zwei Renderer 27, 30 ausgegeben, die aus den 3d-Ausgabebilddaten displayspezifische Zielbilddaten erzeugt. Renderer 27 erzeugt Zielbilddaten für Display 29. Renderer 30 erzeugt Zielbilddaten für Display 32.

Dieses Bildverarbeitungssystem ist in diesem Ausführungsbeispiel in einem Kraftfahrzeug vorgesehen. Die Client-Anwendung 16 führt ein Navigationssystem aus, die Client-Anwendung 17 führt fahrzeugspezifische Funktionen wie beispielsweise das Erfassen eines eingelegten Gangs aus. Die Client-Anwendung 18 wird in einem am Fahrzeug vorübergehend angeschlossenen, mobilen Telekommunikationsgerät (Smartphone) ausgeführt. Die Client-Anwendungen 16, 17,18 erzeugen jeweils individuelle 3d-Bilddaten für jeweils zugeordnete 3d-Bildszenen (Client Szenen) 19, 20, 21. Zusätzlich erzeugen die Client-Anwendungen 16, 17,18 jeweils den 3d-Bildszenen zugeordnete Parameter. Sicherheits-Parameter 22 geben jeweils eine Prioritätsstufe an, in welchem Maß die zugehörige 3d-Bildszene bei der Überlagerung mit einer anderen 3d-Bildszene sichtbar bleibt. Interaktions-Parameter 23 beschreiben, in welcher Weise 3d-Bildobjekte der 3d-Bildszene mit 3d-Bildobjekten anderer 3d-Bildszenen wechselwirken. Beispielsweise gibt ein Interaktions-Parameter 23 für einen Reflexionsgrad eines 3d-Bildobjekts an, wie stark andere 3d-Bildobjekte an dem Objekt gespiegelt werden. Die Sicherheitsparameter 22 und die Interaktionsparameter 23 können von den Client-Anwendungen 16, 17, 18 jeweils gemeinsam bzw. in den Client-Szenen 19, 20, 21 an den Szenen-Manager 24 übertragen werden. Sie können auch in der Welt-Szene 26 und in den Display-Szenen 33, 34 enthalten sein.

Sowohl die 3d-Bilddaten für die 3d-Bildszenen 19, 20, 21 als auch die Parameter 22, 23 werden einem Szenen-Manager 24 zur Bildverarbeitung zugeführt. Dieser umfasst einen 3d-Prozessor 25 zur Verarbeitung der 3d-Bilddaten und erstellt anhand der 3d-Bildszenen eine 3d-Gesamtszene, die hier auch als Welt-Szene 26 bezeichnet wird. Die verschiedenen 3d-Bildszenen 19, 20 und 21 können dabei miteinander überlagert werden, wobei die Sicherheits-Parameter 22 und Interaktions-Parameter 23 angewandt und/oder weiterhin den 3d-Bildszenen 19, 20 und 21 zugeordnet werden. Bei der Anwendung der Sicherheits-Parameter 22 im 3d-Prozessor 25 werden 3d-Bilddaten, denen ein hoher Wert des Sicherheits-Parameters zugeordnet ist, z. B. anderen 3d-Bilddaten überlagert und das Ergebnis in einem Speicher, der vom 3d-Prozessor 25 verwaltet wird, per Schreibschutz vor Überschreiben geschützt. Die Anwendung kann entsprechend auch in einem Renderer 27, 30 erfolgen. Der Szenen-Manager 24 stellt dabei über Zugriffsregeln, die die Sicherheit-Parameter 22 verwenden, sicher, dass sicherheitsrelevante Inhalte nicht fehlerhaft überschrieben oder verändert werden können und dass sicherheitsrelevante Szenen-Elemente nach dem Rendern auf dem jeweiligen Display 29, 32 sichtbar sind. Der 3d-Prozessor 25 kann eine herkömmliche Central Processing Unit (CPU) sein, auf der 3d-Szenen mit einer entsprechenden Anwendung verarbeitet werden, oder auch ein dedizierter Hardwareprozessor zum Verarbeiten von 3d-Szenen wie z.B. ein Grafikprozessor oder ein Vektorprozessor.

Die Client-Anwendungen 16, 17 und 18 und einzelne Prozesse können jeweils Grafikinhalte zu der Welt-Szene 26 beisteuern und ihrerseits abfragen, welche Inhalte bereits in der Welt-Szene 26 vorhanden sind. Der Szenen-Manager 24 verwaltet die Welt-Szene 26 und leitet daraus jeweilige Sub-Szenen ab, die er an die Renderer 27, 30 verteilt. Zur Bildung der Welt-Szene 26 und der Sub-Szenen zieht der Szenen-Manager 24 jeweils displayspezifische Daten 28, 31 heran, die die jeweilige Einbauposition und Perspektive des Displays 29, 32 im Kraftfahrzeug angeben. Die Daten 28,31 werden dem Szenen-Manager 24 von den jeweiligen Renderern 27, 30 als Parameter zugeführt. Die Welt-Szene 26 stellt somit eine 3d-Gesamtszene für alle von den Client-Anwendungen 16, 17 und 18 gelieferten 3d-Bildszenen und inklusive Berücksichtigung aller seiner Displays 29, 32 bereit. Im Ausführungsbeispiel der Figur 1 sind die Displays 29 und 32 2d-Displays. Dem entsprechend rendern die Renderer 27, 31 nach Art eines Rasterprozessors die bei Ihnen eintreffenden 3d-Ausgabebilddaten zu 2d-Zielbilddaten.

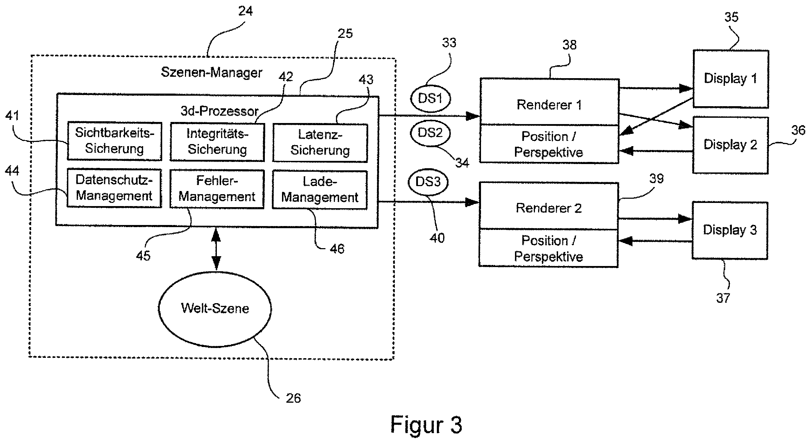

In Figur 3 sind Szenen-Manager 24 und ausgabeseitige Komponenten eines erfindungsgemäßen Bildverarbeitungssystems detaillierter gezeigt. Bei diesem System sind drei Displays 35, 36, 37 vorgesehen. Dabei werden die beiden Displays 35, 36 von einem einzigen Renderer 38 mit Zielbilddaten versorgt. Renderer 39 erzeugt aus 3d-Ausgabebilddaten der Display-Szene 40 Zielbilddaten nur für das eine Display 37. Renderer 38 verwaltet die Parameter für Position und Perspektive für die beiden Displays 35, 36. Umgekehrt wäre es auch möglich, ein Display an mehrere Renderer anzuschließen, wobei jeder der Renderer jeweils ein Teilbild des Displays erzeugt. Möglich ist auch, dass in einem Verbund von Renderern untereinander Aufgaben zum Rendern von Teilbildern für ein oder mehrere Displays aufgeteilt werden.

In Figur 3 sind auch verschiedene Prozesse veranschaulicht, die im 3d-Prozessor 25 stattfinden und die mittels Parametern gesteuert werden, die z.B. von einer Client-Anwendung 16, 17,18 oder von einem Display 35, 36, 37 erzeugt und an den Szenen-Manager 24 gemeldet werden. Im Prozess 41 werden die Sicherheitsparameter verarbeitet und sichergestellt, dass Inhalte, die sicherheitsrelevant sind, letztlich im jeweiligen Display sichtbar sind. Im Integritäts-Sicherungsprozess 42 wird sichergestellt, dass bestimmte Bildinhalte letztlich im jeweiligen Display dargestellt werden. Dazu kann für die jeweiligen Bildinhalte eine Prüfsumme im 3d-Prozessor gebildet werden und ein Vergleich dieser Prüfsumme mit der entsprechenden Prüfsumme des Displays erfolgen. Im Latenz-Sicherungsprozess 43 wird überwacht, dass ein Bildobjekt innerhalb einer vorgegebenen Zeit angezeigt wird. Dies kann insbesondere mit Hilfe eines Deferred Shading erfolgen, wobei nach einem gewissen Zeitablauf von zum Beispiel 100 ms ein Rendering-Prozess am nächst möglichen Prozessschritt abgebrochen und das jeweilige Bildobjekt sofort am Display angezeigt wird. Ein Parameter für diese Prozesssteuerung kann beispielsweise an einen Sicherheits-Parameter 22 oder an einen Interaktions-Parameter 23 gekoppelt werden.

Mit dem Prozess 44 zum Datenschutz-Management kann gesteuert werden, dass bestimmte 3d-Bildelemente und/oder 3d-Bildszenen an bestimmten Displays, in bestimmten Display-Bereichen oder generell nicht angezeigt werden. Auch dieser Prozess ist parametergesteuert. Mit dem Prozess 45 erfolgt das Fehler-Management für die Prozesse im 3d-Prozessor. Mit dem Prozess 46 für ein Lade-Management wird die Prozessgeschwindigkeit gesteuert. Dazu kann beispielsweise eine Verteilung der 3d-Ausgabebilddaten an die Renderer 38,39 so gesteuert werden, dass die Renderer gleichmäßig ausgelastet sind.

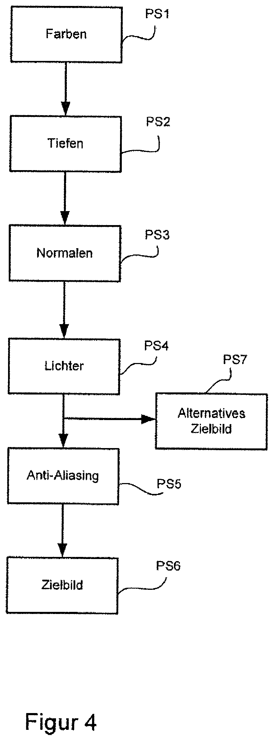

In Figur 4 wird ein in einem Renderer stattfindendes Deferred Shading veranschaulicht. Dabei werden 3d-Bilddaten seriell in Prozessstufen verarbeitet um Zielbilddaten zu erzeugen. Im Prozessschritt PS1 werden Farbdaten der jeweiligen 3d-Bilddaten verarbeitet. Im Prozessschritt PS2 werden Tiefendaten der 3d-Bilddaten verarbeitet. Im Prozessschritt PS3 werden die jeweiligen Normalen zu Oberflächen von Bildobjekten verarbeitet. Die Prozessschritte PS1, PS2 und PS3 können gemeinsam in einem Verfahrensschritt erfolgen. Farben, Tiefen und Normalen sind dann die Ergebnisse dieses einen Verfahrensschritts.

Im Prozessschritt PS4 werden ggf. in Abhängigkeit vorhandener Lichtquellen die Helligkeitswerte (Lichter) der 3d-Bilddaten verarbeitet. Die Prozessschritte PS1 bis PS4 sind notwendig um ein qualitativ ausreichendes Zielbild zu erzeugen. Ein nachfolgender Prozessschritt PS5 dient der Kantenglättung (sog. Anti-Aliasing) von Objekten, bevor das vorgesehene Bildverarbeitungsverfahren mit dem Erstellen eines Zielbildes beendet wird (Prozessschritt PS6). Der Prozessschritt PS5 ist jedoch rechenaufwändig. Deshalb wird es in einem Deferred Shading ermöglicht, den Bildverarbeitungsprozess nach Prozessschritt PS4 abzubrechen und mit der Erstellung eines alternativen Zielbildes zu beenden (Prozessschritt PS7), das zumindest einen gewissen Mindest-Informationsgehalt wiedergibt. Zusätzlich bzw. nachfolgend zum Prozessschritt PS5 können weitere optionale Bildverarbeitungsschritte vorgesehen sein. Zwischen optionalen Schritten können dann weitere optionale Endpunkte vorgesehen sein.

Die beschriebenen Geräte und Systemkomponenten werden insbesondere mit Computerprogrammen gesteuert und können dazu weitere, an sich bekannte Elemente von Computern und digitalen Steuerungseinrichtungen wie einen Mikroprozessor, flüchtige und nicht flüchtige Speicher, Schnittstellen usw. aufweisen. Die Erfindung kann deshalb auch ganz oder teilweise in Form eines Computerprogrammprodukts realisiert werden, das beim Laden und Ausführen auf einem Computer einen erfindungsgemäßen Ablauf ganz oder teilweise bewirkt. Es kann beispielsweise in Form eines Datenträgers wie einer CD/DVD bereit gestellt werden oder auch in Form einer oder mehrerer Dateien auf einem Server, von dem das Computerprogramm herunter ladbar ist.

## Patentansprüche

1. Verfahren zum Verarbeiten von 3d-Eingabebilddaten für eine Anzeige von Bildern auf mindestens einer Anzeigeeinheit (29, 32, 35, 36, 37) in einem Kraftfahrzeug, wobei
- die 3d-Eingabebilddaten jeweils szenenweise entsprechend einer zugeordneten 3d-Bildszene (19, 20, 21) von Client-Anwendungen (16, 17, 18) bereitgestellt werden,
- die 3d-Eingabebilddaten jeweils einer Szenen-Verarbeitungseinheit (24) zur Verwaltung und Verarbeitung zugeführt werden,
- die 3d-Eingabebilddaten szenenweise in der Szenen-Verarbeitungseinheit (24) verarbeitet werden, wobei zumindest zwei 3d-Bildszenen (19, 20, 21) zumindest teilweise überlagert werden und eine 3d-Gesamtszene (26) gebildet und verwaltet wird,
- aus der 3d-Gesamtszene (26) mehrere 3d-Ausgabeszenen (33, 34, 40) abgeleitet werden, bei denen die Überlagerung jeweils entsprechend einem perspektivischen Beobachtungsort erfolgt und dabei 3d-Ausgabebilddaten erzeugt werden,
- wobei die 3d-Ausgabebilddaten mindestens einer Rendereinheit (27, 30, 38, 39), die der Anzeigeeinheit (29, 32, 35, 36, 37) zugeordnet ist, zum Erzeugen von an die Anzeigeeinheit (29, 32, 35, 36, 37) angepassten Zielbilddaten zugeführt werden,
- die Client-Anwendungen (16, 17,18) jeweils den 3d-Bildszenen (19, 20, 21) zugeordnete Sicherheits-Parameter (22) erzeugen, die jeweils eine Prioritätsstufe angeben und wobei eine Prioritätsstufe jeweils angibt, in welchem Maß die zugehörige 3d-Bildszene (19, 20, 21) bei der Überlagerung mit einer anderen 3d-Bildszene sichtbar bleibt,
- wobei den 3d-Eingabebilddaten jeweils eine von mindestens zwei Prioritätsstufen zugeordnet wird, und
- wobei die 3d-Ausgabeszenen (33, 34, 40) derart gestaltet werden, dass beim Erzeugen der Zielbilddaten in der Rendereinheit (27, 30, 38, 39) an einer Zielbildkoordinate diejenigen Zielbilddaten, die aus einer 3d-Bildszene (19, 20, 21) einer höheren Prioritätsstufe abgeleitet werden, Zielbilddaten, die aus einer niedrigeren Prioritätsstufe abgeleitet werden, überlagern.

2. Verfahren nach Anspruch 1, wobei in dem Kraftfahrzeug mehrere ClientAnwendungen (16, 17, 18) ausgeführt werden, die jeweils individuelle 3d-Eingabebilddaten für jeweils zugeordnete 3d-Bildszenen erzeugen und jeweils den 3d-Bildszenen zugeordnete Parameter.

3. Verfahren nach Anspruch 1 oder 2, **dadurch gekennzeichnet, dass** mehrere Anzeigeeinheiten (29, 32, 35, 36, 37) vorgesehen sind, denen jeweils eine Rendereinheit (27, 30, 38, 39) zugeordnet ist und dass die Szenen-Verarbeitungseinheit (24) für die Anzeigeeinheiten (29, 32, 35, 36, 37) jeweils unterschiedliche 3d-Ausgabebilddaten erzeugt und die 3d-Ausgabebilddaten an die eine oder mehreren Rendereinheiten (27, 30, 38, 39) zum Erzeugen der Zielbilddaten verteilt werden.

4. Verfahren nach Anspruch 3, **dadurch gekennzeichnet, dass** die Zielbilddaten jeweils einer Anzeigeeinheit (29, 32, 35, 36, 37) zugeordnet sind und dass die Rendereinheit (27, 30, 38, 39) die Zielbilddaten an die jeweils ihnen zugeordnete Anzeigeeinheit (29, 32, 35, 36, 37) ausgibt.

5. Verfahren nach einem der vorher gehenden Ansprüche, **dadurch gekennzeichnet, dass** die mindestens eine Anzeigeeinheit (29, 32, 35, 36, 37) zur Anzeige von 2d-Bildern ausgebildet ist, dass die Rendereinheit (27, 30, 38, 39) ein Rasterprozessor ist und dass die Zielbilddaten 2d-Bilddaten sind.

6. Verfahren nach einem der vorher gehenden Ansprüche, **dadurch gekennzeichnet, dass** es in dem Kraftahrzeug ausgeführt wird und dass mittels der Prioritätsstufen und der 3d-Ausgabeszenen (33, 34, 40) sicherheitsrelevante Bildelemente andere Bildelemente, die nicht sicherheitsrelevant sind, auf der Anzeigeeinheit (29, 32, 35, 36, 37) überlagern.

7. Verfahren nach einem der vorher gehenden Ansprüche, **dadurch gekennzeichnet, dass** der perspektivische Beobachtungsort einer räumlichen Position der Anzeigeeinheit (29, 32, 35, 36, 37) entspricht.

8. Verfahren nach einem der vorher gehenden Ansprüche, **dadurch gekennzeichnet, dass** die Szenen-Verarbeitungseinheit (24) zum Bilden der 3d-Gesamtszene (26) Interaktionsparameter verwendet, die eine Wechselwirkung zwischen 3d-Bildelementen von mindestens zwei Client-Computersystemen (16, 17, 18) beschreiben, die die 3d-Eingabebilddaten bereit stellen.

9. Verfahren nach einem der vorher gehenden Ansprüche, **dadurch gekennzeichnet, dass** in der Rendereinheit (27, 30, 38, 39) ein Deferred Shading erfolgt.

10. Verfahren nach einem der vorher gehenden Ansprüche, **dadurch gekennzeichnet, dass** im Zuge des Renderns der 3d-Ausgabebilddaten parallel ein vorgegebenes Referenzbild gerendert wird und dass anhand des Rendering-Ergebnisses des Referenzbilds entschieden wird, ob das Rendering-Ergebnis der 3d-Ausgabebilddaten für die weitere Verarbeitung verwendet oder verworfen wird.

11. Verfahren nach Anspruch 2, **dadurch gekennzeichnet, dass** die von den Client-Anwendungen (16, 17, 18) erzeugten Parameter Interaktions-Parameter (23) umfassen, die beschreiben, in welcher Weise 3d-Bildobjekte der 3d-Bildszene mit 3d-Bildobjekten anderer 3d-Bildszenen wechselwirken.

12. Verfahren nach Anspruch 11, **dadurch gekennzeichnet, dass** ein Interaktions-Parameter (23) einen Reflexionsgrad eines 3d-Bildobjekts angibt, wie stark andere 3d-Bildobjekte an dem 3d-Bildobjekt gespiegelt werden.

13. Bildverarbeitungssystem umfassend zumindest eine Steuerung zum Durchführen eines Verfahrens nach einem der Ansprüche 1 bis 12.

14. Fahrzeug, insbesondere Kraftfahrzeug, umfassend ein Bildverarbeitungssystem nach Anspruch 13 und eine Anzeigeeinheit (29, 32, 35, 36, 37), auf der Bilder gemäß von dem Bildverarbeitungssystem verarbeiteten Daten anzeigbar sind.

## Claims

1. Method for processing 3D input image data for a display of images on at least one display unit (29, 32, 35, 36, 37) in a motor vehicle, wherein
- the 3D input image data are provided scene-by-scene in accordance with an associated 3D image scene (19, 20, 21) by client applications (16, 17, 18),
- the 3D input image data are fed to a scene processing unit (24) for management and processing,
- the 3D input image data are processed scene-by-scene in the scene processing unit (24), wherein at least two 3D image scenes (19, 20, 21) are superposed at least partially and a whole 3D scene (26) is formed and managed,
- a plurality of 3D output scenes (33, 34, 40) are derived from the whole 3D scene (26), with the superposition taking place in each case in accordance with a perspective viewing location, and 3D output image data being produced in the process,
- wherein the 3D output image data are supplied to at least one rendering unit (27, 30, 38, 39), which is associated with the display unit (29, 32, 35, 36, 37), for producing target image data that are adapted to the display unit (29, 32, 35, 36, 37),
- the client applications (16, 17, 18) in each case generate security parameters (22) associated with the 3D image scenes (19, 20, 21), which security parameters in each case specify a priority stage, and wherein a priority stage in each case specifies the extent to which the associated 3D image scene (19, 20, 21) remains visible when superposed by another 3D image scene,
- wherein the 3D input image data are in each case associated with one of at least two priority stages, and
- wherein the 3D output scenes (33, 34, 40) are structured in such a way that, as the target image data are generated in the rendering unit (27, 30, 38, 39) at a target image coordinate, those image target data that are derived from a 3D image scene (19, 20, 21) of a higher priority stage superpose target image data derived from a lower priority stage.

2. Method according to claim 1, wherein a plurality of client applications (16, 17, 18) are run in the motor vehicle and in each case generate individual 3D input image data for associated 3D image scenes and parameters associated with the 3D image scenes.

3. Method according to claim 1 or 2, **characterised in that** a plurality of display units (29, 32, 35, 36, 37) are provided, which are in each case associated with a rendering unit (27, 30, 38, 39), and **in that** the scene processing unit (24) produces different 3D output image data for the display units (29, 32, 35, 36, 37) in each case and the 3D output image data are distributed to the one or more rendering units (27, 30, 38, 39) for producing the target image data.

4. Method according to claim 3, **characterised in that** the target image data are in each case associated with a display unit (29, 32, 35, 36, 37), and **in that** the rendering unit (27, 30, 38, 39) outputs the target image data to the corresponding display unit (29, 32, 35, 36, 37) associated with the target image data in each case.

5. Method according to any one of the preceding claims, **characterised in that** the at least one display unit (29, 32, 35, 36, 37) is configured for displaying 2D images, **in that** the rendering unit (27, 30, 38, 39) is a raster processor, and **in that** the target image data are 2D image data.

6. Method according to any one of the preceding claims, **characterised in that** the method is carried out in the motor vehicle, and **in that**, by means of the priority stages and the 3D output scenes (33, 34, 40), safety-relevant image elements are superposed on other image elements, which are not safety-relevant, on the display unit (29, 32, 35, 36, 37).

7. Method according to any one of the preceding claims, characterised the perspective viewing location corresponds to a spatial position of the display unit (29, 32, 35, 36, 37).

8. Method according to any one of the preceding claims, **characterised in that** the scene processing unit (24) uses, for forming the whole 3D scene (26), interaction parameters that describe an interaction between 3D image elements of at least two client-computer systems (16, 17, 18) that provide the 3D input image data.

9. Method according to any one of the preceding claims, **characterised in that** a deferred shading takes place in the rendering unit (27, 30, 38, 39).

10. Method according to any one of the preceding claims, **characterised in that** a predefined reference image is rendered in parallel with the rendering of the 3D output image data, and **in that** a decision is made based on a rendering result of the reference image as to whether the rendering result of the 3D output image data is used for further processing or is discarded.

11. Method according to claim 2, **characterised in that** the parameters generated by the client applications (16, 17, 18) comprise interaction parameters (23) which describe the way in which 3D image objects of the 3D image scene interact with 3D image objects of other 3D image scenes.

12. Method according to claim 11, **characterised in that** an interaction parameter (23) specifies a reflectance of a 3D image object, indicating how strongly other 3D image objects are reflected by the 3D image object.

13. Image processing system, comprising at least one controller for carrying out a method according to any one of claims 1 to 12.

14. Vehicle, in particular motor vehicle, comprising an image processing system according to claim 13 and a display unit (29, 32, 35, 36, 37), on which images can be displayed in accordance with data processed by the image processing system.

## Revendications

1. Procédé de traitement de données d'image d'entrée 3D destiné à l'affichage d'images sur au moins une unité d'affichage (29, 32, 35, 36, 37) dans un véhicule,
selon lequel
- les données d'image d'entrée 3D sont respectivement fournies par des applications client (16, 17, 18) sous forme de scènes, selon une scène d'image 3D (19, 20, 21) associée,
- les données d'image d"entrée 3D sont respectivement transmises à une unité de traitement de scènes (24) pour permettre leur gestion et leur traitement,
- les données d'image d'entrée 3D sont traitées sous forme de scènes dans l'unité de traitement de scènes (24), au moins deux scènes d'image 3D (19, 20, 21) étant au moins partiellement superposées, et une scène globale 3D (26) étant formée et gérée,
- de la scène globale 3D (26) sont dérivées plusieurs scènes de sortie 3D (33, 34, 40), dans lesquelles la superposition est respectivement effectuée selon un lieu d'observation en perspective, et des données d'image de sortie 3D sont ainsi obtenues,
- les données d'image de sortie 3D sont transmises à au moins une unité de rendu (27, 30, 38, 39) qui est associée à l'unité d'affichage (29, 32, 35, 36, 37) pour permettre d'obtenir des données d'image cibles adaptées à l'unité d'affichage (29, 32, 35, 36, 37),
- les applications client (16, 17, 18) produisent respectivement des paramètres de sécurité (22) associés aux scènes d'image 3D (19, 20, 21), qui spécifient respectivement un niveau de priorité, et un niveau de priorité spécifié respectivement dans quelle mesure la scène d'image 3D (19, 20, 21) associée reste visible lors de la superposition avec une autre scène d'image 3D,
- aux données d'image d'entrée 3D est respectivement associé un niveau de priorité parmi au moins deux niveaux de priorité, et
- les scènes de sortie 3D (33, 34, 40) sont agencées de sorte que, lors de l'obtention des données d'image-cibles dans l'unité de rendu (27, 30, 38, 39), sur une coordonnée d'image cible les données d'image-cibles qui sont dérivées d'une scène d'images 3D (19, 20, 21) ayant un niveau de priorité élevé recouvrent des données d'image cibles qui sont dérivées d'une scène d'images ayant un niveau de priorité plus faible.

2. Procédé conforme à la revendication 1,
selon lequel, dans le véhicule sont effectuées plusieurs applications client (16, 17, 18) qui permettent respectivement d'obtenir des données d'image d'entrée 3D individuelles pour des scènes d'image 3D respectivement associées et les paramètres respectivement associés aux scènes d'image 3D.

3. Procédé conforme à la revendication 1 et 2,
**caractérisé en ce qu'**
Il est prévu plusieurs unités d'affichage (29, 32, 35, 36, 37) auxquelles est respectivement associée une unité de rendu (27, 30, 38, 39), l'unité de traitement de scènes (24) produit respectivement, pour les unités d'affichage (29, 32, 35, 36, 37) des données d'image de sortie 3D différentes, et les données d'image de sortie 3D sont réparties sur une ou plusieurs unité(s) de rendu (27, 30, 38, 39) pour permettre d'obtenir les données d'image cibles.

4. Procédé conforme à la revendication 3,
**caractérisé en ce que**
les données d'image cibles sont respectivement associées à une unité d'affichage (29, 32, 35, 36, 37), et l'unité de rendu (27, 30, 38, 39) délivre les données d'image cibles à l'unité d'affichage (29, 32, 35, 36, 37) qui lui est respectivement associée.

5. Procédé conforme à l'une des revendications précédentes,
**caractérisé en ce que**
l'unité d'affichage (29, 32, 35, 36, 37) est réalisée pour permettre d'afficher des images 2D, l'unité de rendu (27, 30, 38, 39) est un processeur d'images tramées et les données d'image cibles sont des données d'image 2D.

6. Procédé conforme à l'une des revendications précédentes,
**caractérisé en ce qu'**
il est mis en œuvre dans le véhicule, et les niveaux de priorité et les scènes de sortie 3D (33, 34, 40) permettent à des éléments d'image importants pour la sécurité de recouvrir d'autres éléments d'image qui ne sont pas importants sur la sécurité sur l'unité d'affichage (29, 32, 35, 36, 37).

7. Procédé conforme à l'une des revendications précédentes,
**caractérisé en ce que**
le lieu d'observation en perspective correspond à la position spatiale de l'unité d'affichage (29, 32, 35, 36, 37).

8. Procédé conforme à l'une des revendications précédentes,
**caractérisé en ce que**
l'unité de traitement de scènes (24) utilise, pour former la scène globale 3D (26) des paramètres d'interaction qui décrivent une interaction entre des éléments d'image 3D d'au moins deux systèmes d'ordinateur client (16, 17, 18) qui fournissent les données d'image d'entrée 3D.

9. Procédé conforme à l'une des revendications précédentes,
**caractérisé en ce que**
dans l'unité de rendu (27, 30, 38, 39) est effectué un Deferred Shading.

10. Procédé conforme à l'une des revendications précédentes,
**caractérisé en ce qu'**
au cours du rendu des données d'image de sortie 3D, est parallèlement, effectué le rendu d'une image de référence prédéfinie, et, sur le fondement du résultat du rendu de l'image de référence, il est décidé si le résultat du rendu des données d'image de sortie 3D est utilisé pour la poursuite du traitement ou et rejeté.

11. Procédé conforme à la revendication 2,
**caractérisé en ce que**
les paramètres produits par les applications client (16, 17, 18)comportent des paramètres d'interaction (23) qui décrivent de quelle façon des objets d'image 3D de la scène d'image 3D interagissent avec des objets d'image 3D d'autres scènes d'image 3D.

12. Procédé conforme à la revendication 11,
**caractérisé en ce qu'**
un paramètre d'interaction (23) spécifie un degré de réflexion d'un objet d'image 3D indiquant dans quelle mesure des autres objets d'image 3D sont reflétés sur l'objet d'image 3D.

13. Système de traitement d'images comprenant au moins une commande permettant la mise en œuvre d'un procédé conforme à l'une des revendications 1 à 12.

14. Véhicule, en particulier véhicule automobile comprenant un système de traitement d'images conforme à la revendication 13 et une unité d'affichage (29, 32, 35, 36, 37) sur laquelle peuvent être affichées des images de données traitées par ce système de traitement d'images.
